# EUROPEAN PATENT APPLICATION

(11) **EP 4 556 098 A1**
(43) Date of publication of application: **21.05.2025**
(21) Application number: 22951180.3
(22) Date of filing: 15.07.2022
(51) Int. Cl.: B01D 53/04, C01B 32/50

(54) **CARBON-DIOXIDE COLLECTION SYSTEM**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); FUJINO, Jun, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2022/027811
(87) International publication number: WO 2024/013971

(57) **Abstract**

A carbon dioxide recovery system includes a blower; a holding unit that holds an adsorbent that adsorbs carbon dioxide at a position where an air flow of the blower is received; a sensor that detects that the adsorbent is held in the holding unit; and a control unit that is configured to control the blower, in which the control unit drives the blower when the sensor detects that the adsorbent is held in the holding unit in a state where the blower is stopped.

## Description

### Technical Field

The present invention relates to a carbon dioxide recovery system.

### Background Art

Patent Document 1 discloses a technology of recovering carbon dioxide in air by using an adsorbent capable of adsorbing carbon dioxide.

### Citation List

### Patent Documents

Patent Document 1: Japanese Unexamined Patent Application,
First Publication JP 2020-131 166 A

### Summary of Invention

### Problem to be Solved by the Invention

In a case where carbon dioxide is adsorbed onto an adsorbent, a carbon dioxide concentration of air on a surface of the adsorbent gradually decreases. In a case where the carbon dioxide concentration decreases, the recovery efficiency of carbon dioxide by the adsorbent decreases. Therefore, in order to maintain the recovery efficiency of carbon dioxide, it is preferable to continuously direct air in which carbon dioxide concentration has not decreased to the adsorbent. In the configuration of Patent Document 1, the air flow generation unit provided in the air conditioning device is used to direct an air flow to the adsorbent. However, there is a problem that the recovery efficiency of carbon dioxide decreases while the air conditioning device is stopped.

The present invention has been made in order to solve the above-described problems, and an object of the present invention is to provide a carbon dioxide recovery system capable of suppressing a decrease in the recovery efficiency of carbon dioxide.

### Means to Solve the Problem

A carbon dioxide recovery system according to the present invention includes a blower; a holding unit that holds an adsorbent that adsorbs carbon dioxide at a position where an air flow of the blower is received; a sensor that detects that the adsorbent is held in the holding unit; and a control unit that is configured to control the blower, in which the control unit drives the blower when the sensor detects that the adsorbent is held in the holding unit in a state where the blower is stopped.

### Effects of the Invention

According to the present invention, it is possible to provide a carbon dioxide recovery system capable of suppressing a decrease in the recovery efficiency of carbon dioxide.

### Brief Description of Drawings

FIG. 1 A schematic diagram showing a configuration of a carbon dioxide recovery system ofEmbodiment 1.
FIG. 2 A block diagram showing the configuration of the carbon dioxide recovery system ofEmbodiment 1.
FIG. 3 A graph showing an example of the transition of a temperature difference between the surface temperature of an adsorbent and the temperature of outside air.
FIG. 4 A schematic diagram showing a configuration of a carbon dioxide recovery system according to a modification example.

### Description of Embodiments

### Embodiment 1

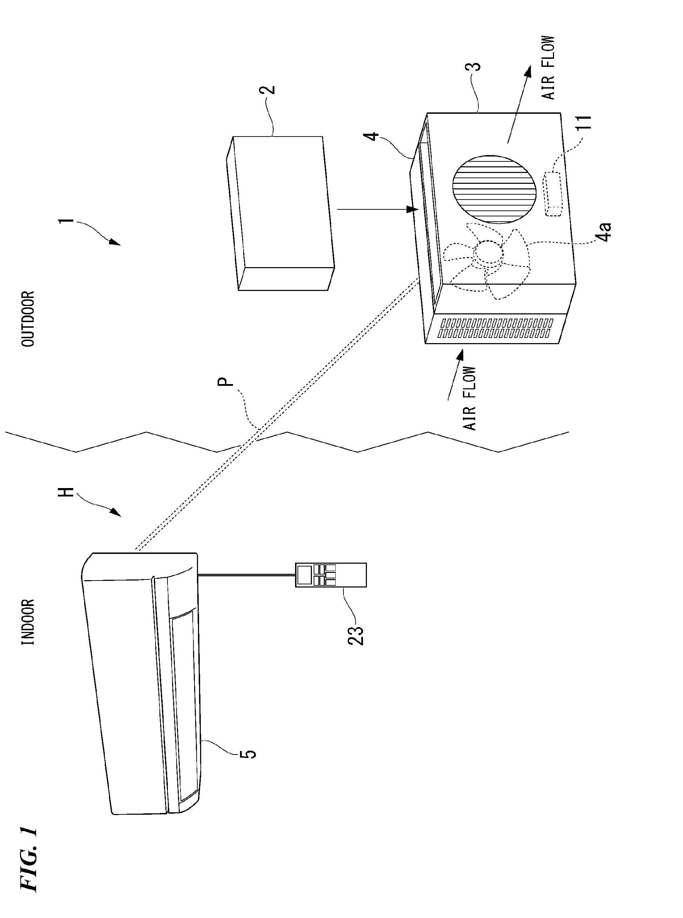

FIG. 1 is a schematic diagram showing a configuration of a carbon dioxide recovery system 1 according toEmbodiment 1. As shown in FIG. 1, the carbon dioxide recovery system 1 includes an adsorbent 2, a holding unit 3, and an outdoor unit 4. The outdoor unit 4 is a part of a heat pump device H and is used together with an indoor unit 5.

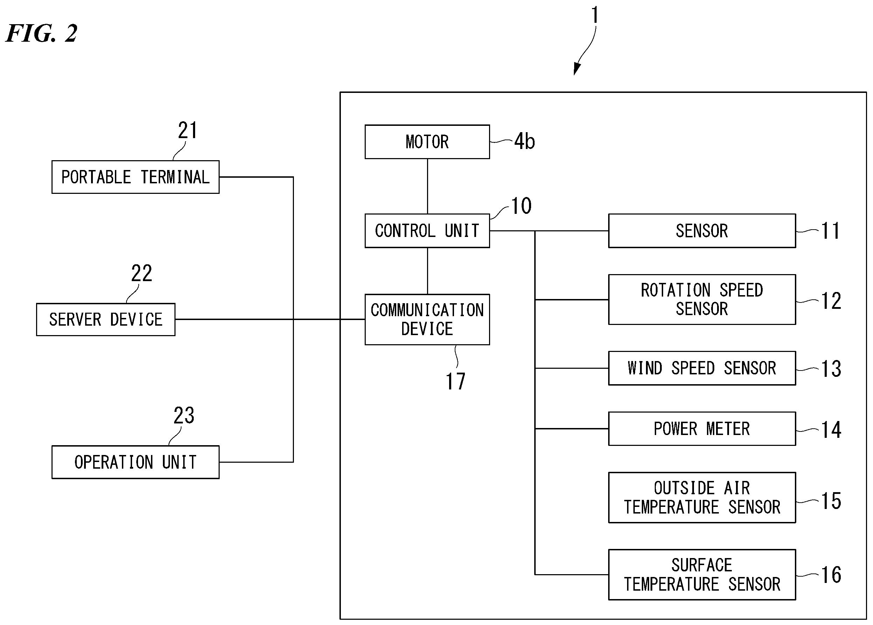

The heat pump device H may be, for example, an air conditioner. The outdoor unit 4 and the indoor unit 5 are connected by a pipe P or the like for circulating a refrigerant. The outdoor unit 4 includes a blower 4a (fan). The blower 4a includes a motor 4b (see FIG. 2). In addition, the outdoor unit 4 includes a compressor (not shown), a heat exchanger, and the like.

The adsorbent 2 includes a material capable of adsorbing carbon dioxide. Examples of a material capable of adsorbing carbon dioxide include amine, zeolite, silica gel, diatomaceous earth, alumina, activated carbon, and the like. A plurality of materials may be selected from the above, or a material other than the above may be selected. The adsorbent 2 shown in FIG. 1 has a rectangular parallelepiped shape (block shape), but the shape of the adsorbent 2 can be appropriately changed.

For example, the adsorbent 2 may be granular (for example, bead-like (spherical) or pellet-like (cylindrical)). Alternatively, a powdery adsorbent 2 may be adopted. In this case, the powdery adsorbent 2 may be carried on a surface of a base material. The base material may have, for example, a honeycomb shape. In addition, a container (filling container) having air permeability may be filled with the adsorbent 2, and the container may be held by the holding unit 3.

As the adsorbent 2, a material in which the carbon dioxide is separated when the adsorbent 2 which has adsorbed the carbon dioxide is heated (for example, 60 °C to 120 °C) is preferable. The heating temperature is appropriately changed depending on the specific material of the adsorbent 2.

The holding unit 3 can hold the adsorbent 2 at a position where the holding unit 3 receives the air flow generated by the blower 4a of the outdoor unit 4. In FIG. 1, the holding unit 3 is disposed on a downstream side of the blower 4a. Note that, the holding unit 3 may be disposed on an upstream side of the blower 4a.

The holding unit 3 in the present embodiment is a box-shaped container (holding container) capable of accommodating the adsorbent 2 and has air permeability. In addition, the holding unit 3 has an opening to allow the adsorbent 2 to pass through. In FIG. 1, the opening faces upward, but the position of the opening can be changed. In addition, the holding unit 3 may have an openable and closable door instead of the opening. In this case, the door can be opened and closed to accommodate the adsorbent 2 in the holding unit 3 or to take out the adsorbent 2 from the holding unit 3.

A configuration for providing the holding unit 3 with air permeability can be appropriately changed, but the entire holding unit 3 or a part of the holding unit 3 may be mesh-like, for example. For example, in a case where the adsorbent 2 is granular, a plurality of pores smaller than a particle diameter of the adsorbent 2 may be formed in the holding unit 3. A material of the holding unit 3 may be appropriately changed and may be metal or resin. A structure other than the above can also be adopted for the holding unit 3.

The carbon dioxide recovery system 1 includes a sensor 11 that detects whether or not the adsorbent 2 is held at a position where the air flow of the blower 4a is received. The sensor 11 may be a weight type. The "weight type" is a type of detecting the presence of the adsorbent 2 by utilizing the weight of the adsorbent 2 itself or the weight of an object including the adsorbent 2. The "object including the adsorbent 2" is, for example, the holding unit 3 in a state of accommodating the adsorbent 2. The "utilizing the weight" includes a case in which the mechanical switch is pressed by the weight in addition to a case in which the weight is measured. As shown in FIG. 1, the weight type sensor 11 may be disposed at the bottom part of the holding unit 3 on the inner side.

Note that, the sensor 11 is not limited to the weight type. For example, the sensor 11 may be an optical type. The optical type sensor 11 includes a light emission unit and a light receiving unit. The optical type sensor 11 can detect the presence or absence of the adsorbent 2 based on whether the light emitted from the emission unit is detected by the light receiving unit. The light receiving unit may be disposed at a position where the light emitted from the emission unit is received after being reflected by the adsorbent 2.

In this case, when the light emitted from the emission unit is detected by the light receiving unit, it is determined that the adsorbent 2 is present. Alternatively, the light receiving unit and the emission unit may be disposed to face each other, and the adsorbent 2 may be held between the light receiving unit and the emission unit. In this case, when the light emitted from the emission unit is not detected by the light receiving unit, it is determined that the adsorbent 2 is present. These determinations may be performed by the sensor 11 or may be performed by the control unit 10 described below.

FIG. 2 is a block diagram showing a configuration example of the carbon dioxide recovery system 1. As shown in FIG. 2, the carbon dioxide recovery system 1 includes a control unit 10, the sensor 11, a rotation speed sensor 12, a wind speed sensor 13, a power meter 14, an outside air temperature sensor 15, a surface temperature sensor 16, and a communication device 17. The control unit 10 is connected to each of the components 11 to 17. In addition, the control unit 10 is connected to the motor 4b of the blower 4a.

It should be noted that the carbon dioxide recovery system 1 may not include some or all of the rotation speed sensor 12, the wind speed sensor 13, the power meter 14, the outside air temperature sensor 15, the surface temperature sensor 16, and the communication device 17.

The control unit 10 controls at least the motor 4b of the blower 4a based on a result of detection or measurement by the sensor 11, the rotation speed sensor 12, and the like. The control unit 10 may control components other than the blower 4a. For example, the control unit 10 may control a compressor or the like included in the heat pump device H. A processor such as a central processing unit (CPU) can be used as the control unit 10.

The rotation speed sensor 12 measures the rotational speed of the blower 4a. A measurement result by the rotation speed sensor 12 is input to the control unit 10. The control unit 10 may control the blower 4a based on the measurement result by the rotation speed sensor 12.

The wind speed sensor 13 measures wind speed of the air flow generated by the blower 4a and received by the adsorbent 2. A measurement result by the wind speed sensor 13 is input to the control unit 10. The control unit 10 may control the blower 4a based on the measurement result by the wind speed sensor 13.

The power meter 14 measures power consumption of the motor 4b of the blower 4a. A measurement result by the power meter 14 is input to the control unit 10. The control unit 10 may control the blower 4a based on the measurement result by the power meter 14.

The outside air temperature sensor 15 measures the outside air temperature around the adsorbent 2. The outside air temperature sensor 15 may measure a temperature inside the holding unit 3, or may measure the temperature outside the holding unit 3. In a case where the outdoor unit 4 has a temperature sensor, the temperature sensor may be used as the outside air temperature sensor 15. As the outside air temperature sensor 15, for example, an electric thermometer can be used.

The surface temperature sensor 16 measures the surface temperature of the adsorbent 2. As the surface temperature sensor 16, a non-contact type thermometer (for example, an infrared thermometer) is suitable. However, the measurement methods of the outside air temperature sensor 15 and the surface temperature sensor 16 can be appropriately changed. Measurement results from the outside air temperature sensor 15 and the surface temperature sensor 16 are input to the control unit 10. The control unit 10 may control the blower 4a based on the measurement results from the outside air temperature sensor 15 and the surface temperature sensor 16.

The communication device 17 communicates with external devices (for example, a portable terminal 21, a server device 22, an operation unit 23, and the like) based on control by the control unit 10. The portable terminal 21 is, for example, a smartphone, a notebook PC, a tablet terminal, or the like. An application or the like for operating the heat pump device H may be installed on the portable terminal 21. The server device 22 includes a processing unit, a storage unit, a communication unit, and the like, and can process and store information.

The server device 22 may be, for example, a cloud server. In addition, the server device 22 may be installed in a data center. The operation unit 23 is a component for operating the heat pump device H. For example, in a case where the heat pump device H is an air conditioner, the operation unit 23 is a remote controller or the like that communicates with the indoor unit 5.

Hereinafter, an example of the control performed by the control unit 10 will be described.

When the heat pump device H is not in operation (for example, when the heat pump device H is not in the heating mode or the cooling mode), the blower 4a is usually stopped. Therefore, the air flow does not reach the adsorbent 2, and the adsorption efficiency of carbon dioxide is decreased. In a case where the sensor 11 detects that the adsorbent 2 is held in the holding unit 3 in a state in which the blower 4a is stopped, the control unit 10 drives the blower 4a. As a result, even when the heat pump device H is not in operation, the air flow can be directed at the adsorbent 2 to promote the adsorption of carbon dioxide.

In addition, when the heat pump device H is in operation, the blower 4a is usually driven to direct the air flow to a heat exchanger of the outdoor unit 4. Here, in a case where the adsorbent 2 is held in the holding unit 3, the air flow generated by the blower 4a is blocked by the adsorbent 2. Therefore, the air volume that reaches the heat exchanger of the outdoor unit 4 may decrease, potentially decreasing the heat exchange efficiency. In a case where the sensor 11 detects that the adsorbent 2 is held in the holding unit 3 in a state in which the heat pump device H is in operation, the control unit 10 increases the rotational speed of the blower 4a. As a result, it is possible to satisfy both the performance of the heat pump device H and the recovery efficiency of carbon dioxide.

In addition, the control unit 10 may output a notification signal in a situation where it is presumed that the adsorption of carbon dioxide by the adsorbent 2 has been sufficiently performed. The "notification signal" is a signal for notifying a user or the like of the timing for replacing the adsorbent 2. As a specific example, the control unit 10 outputs the notification signal to the portable terminal 21, the server device 22, the operation unit 23, and the like via the communication device 17.

In a case where the notification signal is received, the portable terminal 21 may display information (message, icon, or the like) prompting the replacement of the adsorbent 2 on an application screen or the like. In a case where the notification signal is received, the server device 22 may display information prompting the replacement of the adsorbent 2 on the device connected to the server device 22.

In a case where the notification signal is received, the operation unit 23 may display information prompting the replacement of the adsorbent 2 on a display unit (liquid crystal screen or the like) provided in the operation unit 23. It should be noted that "notifying of the timing for replacing the adsorbent 2" includes notifying that the replacement timing will arrive after a predetermined period (for example, a few days) in addition to notifying that the replacement timing has already arrived.

The condition for the control unit 10 to output the notification signal can be appropriately set. For example, in a case where the sensor 11 is a weight type, the change in weight of the adsorbent 2 can be acquired based on the detection result of the sensor 11. In a case where the adsorption of carbon dioxide by the adsorbent 2 progresses, the weight of the adsorbent 2 increases. In a case where the adsorbent 2 adsorbs a certain amount of carbon dioxide, the adsorption rate of the carbon dioxide decreases.

That is, it is possible to estimate the remaining capacity of the adsorbent 2 to adsorb carbon dioxide based on the change in weight of the adsorbent 2. In this regard, the control unit 10 may output a notification signal in a case where the increase in the weight of the adsorbent 2 exceeds a threshold value. The threshold value may be set based on the result obtained from a preliminary experiment or the like, which indicates the change in weight when the adsorbent 2 adsorbs carbon dioxide.

In a case where the condition is satisfied, the control unit 10 outputs the notification signal, prompting the user or the like to replace the adsorbent 2. As a result, the adsorbent 2 with decreased adsorption efficiency can be prevented from being continuously held in the holding unit 3. It should be noted that the person prompted to replace the adsorbent 2 is not limited to the user of the heat pump device H, but may also be, for example, a manager of the building in which the heat pump device H is installed, or a maintenance contractor of the heat pump device H.

**In** addition, the adsorption efficiency of carbon dioxide by the adsorbent 2 is correlated with the amount of air flow passed through the adsorbent 2 (hereinafter referred to as cumulative air volume). Specifically, in a case where the adsorbent 2 has not yet sufficiently adsorbed the carbon dioxide, the adsorption of the carbon dioxide proceeds as the air flow reaches the adsorbent 2. However, as the cumulative air volume increases, the adsorption of carbon dioxide by the adsorbent 2 approaches a saturated state, and the adsorption efficiency gradually decreases.

That is, it is possible to estimate the remaining capacity of the adsorbent 2 to adsorb carbon dioxide based on the cumulative air volume that has passed through the adsorbent 2. **In** this respect, the control unit 10 may output a notification signal in a case where the cumulative air volume passing through the adsorbent 2 exceeds the threshold value. The threshold value may be set based on the results obtained from preliminary experiments or the like, which indicate the change in the amount of carbon dioxide adsorbed when the air flow is continuously directed to the adsorbent 2.

The cumulative air volume that has passed through the adsorbent 2 can be calculated, for example, based on the length of time in which the presence of the adsorbent 2 is detected by the sensor 11, the rotational speed of the blower 4a measured by the rotation speed sensor 12, and the driving time of the blower 4a. Alternatively, the cumulative air volume may be calculated based on the length of time in which the presence of the adsorbent 2 is detected by the sensor 11 and the measurement result of the wind speed sensor 13.

Alternatively, the cumulative air volume may be calculated based on the length of time in which the presence of the adsorbent 2 is detected by the sensor 11 and the measurement result of the power meter 14. Since the power consumption of the blower 4a is correlated with the driving amount (the product of the driving time and the rotational speed) of the blower 4a, the cumulative air volume can be calculated by using the measurement result of the power meter 14.

**In** addition, when the adsorbent 2 adsorbs carbon dioxide, the surface temperature of the adsorbent 2 changes. For example, in the zeolite-based adsorbent 2, the surface temperature of the adsorbent 2 increases due to a reaction heat accompanying the adsorption of carbon dioxide. Therefore, it is possible to estimate whether or not the adsorption of carbon dioxide in the adsorbent 2 progresses based on the change in temperature of the adsorbent 2.

Here, the surface temperature of the adsorbent 2 also changes depending on the temperature of the outside air. Therefore, it is preferable to use a difference between the surface temperature of the adsorbent 2 and the temperature of the outside air (hereinafter, simply referred to as "temperature difference"). By using the temperature difference, the influence of temperature change in the outside air can be eliminated.

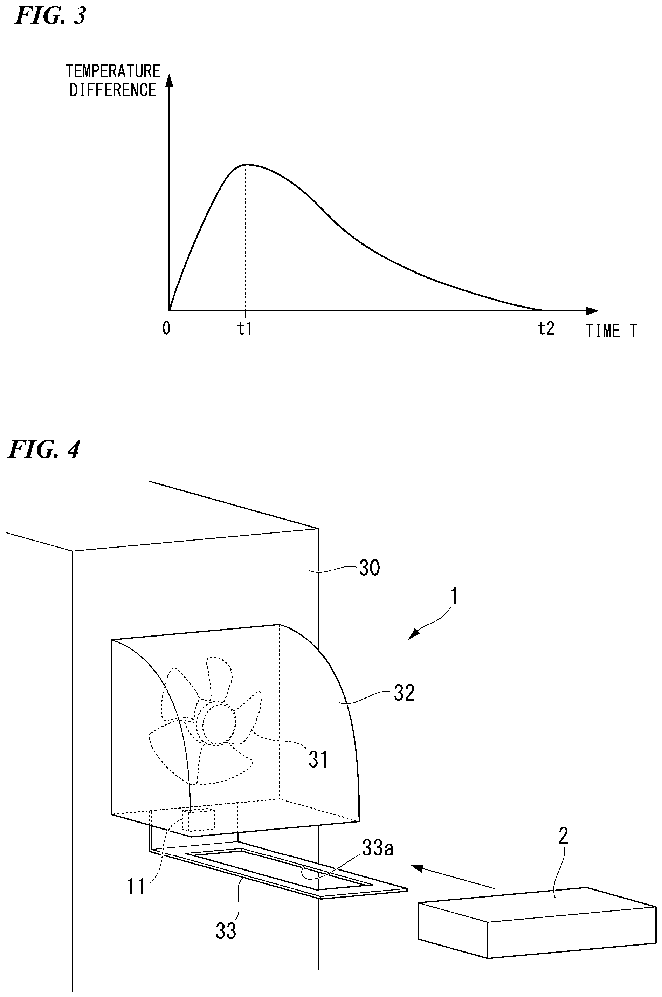

FIG. 3 is a graph showing an example of the transition of the temperature difference. The horizontal axis represents the time during which the adsorbent 2 is held in the holding unit 3, and the vertical axis represents the above-described temperature difference. The origin (T = 0) of the horizontal axis is a point in time at which the holding unit 3 holds the adsorbent 2. **In** a case where the adsorbent 2 is held in the holding unit 3, the adsorption of carbon dioxide by the adsorbent 2 starts, and the temperature difference due to the reaction heat increases.

The temperature difference reaches its maximum at time T = t1, and the temperature difference decreases thereafter. This means that the amount of carbon dioxide adsorbed by the adsorbent 2 per unit time decreases. The temperature difference becomes zero at time T = t2. This means that the adsorption of carbon dioxide by the adsorbent 2 has reached saturation, and the adsorption reaction has stopped.

The control unit 10 may determine that the adsorption of carbon dioxide by the adsorbent 2 is completed when the temperature difference becomes zero after the time T = 0, and may output a notification signal. Alternatively, the notification signal may be output after the time T = t1 (that is, after the temperature difference reaches its maximum), that is, when the temperature difference falls below the threshold value.

As described above, the carbon dioxide recovery system 1 according to the present embodiment includes the blower 4a, the holding unit 3 that holds the adsorbent 2 capable of adsorbing carbon dioxide at a position where the air flow of the blower 4a is received, the sensor 11 that detects that the adsorbent 2 is held in the holding unit 3, and the control unit 10 that controls the blower 4a. In a case where the sensor 11 detects that the adsorbent 2 is held in the holding unit 3 in a state in which the blower 4a is stopped, the control unit 10 drives the blower 4a.

With such a carbon dioxide recovery system 1, even when the heat pump device H is not in operation, the air flow can be directed to the adsorbent 2, thereby suppressing the decrease in the recovery efficiency of carbon dioxide. In particular, in a case where the heat pump device H is an air conditioner, carbon dioxide can be recovered by utilizing the outdoor unit 4 even in seasons with a low operation rate (for example, spring and autumn in Japan).

In addition, the holding unit 3 in the present embodiment is a container having air permeability. As a result, the position where the adsorbent 2 is held is stabilized, allowing the sensor 11 to detect the adsorbent 2 more reliably.

In addition, the blower 4a in the embodiment of the present embodiment is a fan included in the outdoor unit 4 of the heat pump device H. Even when the heat pump device H is not in operation, driving the fan of the outdoor unit 4 results in minimal impact, such as noise on the indoor space. Therefore, the recovery of carbon dioxide can be promoted while suppressing the impact on living spaces or the like.

In addition, the control unit 10 may increase the rotational speed of the blower 4a in a case where the sensor 11 detects that the adsorbent 2 is held by the holding unit 3 in a state where the heat pump device H is in operation. In this case, it is possible to suppress a decrease in performance of the heat pump device H caused by the air flow of the blower 4a being blocked by the adsorbent 2.

In addition, the sensor 11 may detect that the holding unit 3 holds the adsorbent 2 based on weight. That is, the sensor 11 may be a weight type. Then, the control unit 10 may output a notification signal for notifying a timing for replacing the adsorbent 2 based on the amount of weight increase detected by the sensor 11. In this case, it is possible to avoid leaving the adsorbent 2, in which the adsorption of carbon dioxide is completed, as it is.

In addition, the sensor 11 may be an optical sensor. In this case, the sensor 11 can be miniaturized.

In addition, the control unit 10 may calculate the cumulative air volume that has passed through the adsorbent 2 based on the detection result by the sensor 11 and the measurement result by the rotation speed sensor 12 that measures the rotational speed of the blower 4a. Alternatively, the control unit 10 may calculate the cumulative air volume based on the detection result by the sensor 11 and the measurement result by the wind speed sensor 13 that measures the wind speed of the air flow passing through the adsorbent 2. Alternatively, the control unit 10 may calculate the cumulative air volume based on the detection result by the sensor 11 and the power meter 14 that measures the power consumption of the motor 4b in the blower 4a.

In addition, the control unit 10 may output a notification signal for notifying the timing for replacing the adsorbent 2 based on the calculation result of the cumulative air volume. The control unit 10 may calculate the cumulative air volume using each of the rotation speed sensor 12, the wind speed sensor 13, and the power meter 14, and may output the notification signal in a case where the result of any of the calculations satisfies a condition. In addition, the control unit 10 may output a notification signal based on a change in the difference between an outside air temperature sensor 15 that measures the temperature of the outside air and a surface temperature sensor 16 that measures the surface temperature of the adsorbent 2.

**In** addition, the carbon dioxide recovery system 1 may include a communication device 17. Then, the communication device 17 may transmit the notification signal output by the control unit 10 to any or all of the portable terminal 21, the server device 22, and the operation unit 23. **In** this case, the replacement of the adsorbent 2 can be prompted to a user, a manager, a maintenance contractor, or the like of the heat pump device H.

However, the technical scope of the present invention is not limited to the above embodiments, and various modifications can be made without departing from the gist of the present invention.

For example, the blower 4a according to the embodiment was a fan of the outdoor unit 4. However, as shown in FIG. 4, a ventilating fan 31 provided in a building 30 may be used as the blower. Further, a holding unit 33 may be provided on the lower part of a hood 32 that covers the ventilating fan 31 from the outside of the building 30. The holding unit 33 shown in FIG. 4 extends substantially horizontally from the wall surface of the building 30, and the adsorbent 2 can be held on the upper part of the holding unit 33.

An air flow sucked into the building 30 by the ventilating fan 31 or an air flow discharged from the building 30 by the ventilating fan 31 passes through the lower part of the hood 32. Therefore, when the holding unit 33 holds the adsorbent 2, the air flow reaches the adsorbent 2. As shown in FIG. 4, the holding unit 33 may have a ventilation port 33a. In this case, the holding unit 33 is given with air permeability, making it easier for the air flow to reach the adsorbent 2. A different configuration may be adopted to impart air permeability to the holding unit 33.

In addition, a sensor 11 that detects that the adsorbent 2 is held in the holding unit 33 is provided in the vicinity of the wall surface of the building 30. Further, a control unit 10 (not shown) is connected to the ventilating fan 31.

The carbon dioxide recovery system shown in FIG. 4 also includes a blower (ventilating fan 31), a holding unit 33 that holds the adsorbent 2 capable of adsorbing carbon dioxide at a position where the air flow of the blower is received, a sensor 11 that detects that the adsorbent 2 is held in the holding unit 33, and a control unit 10 that controls the blower.

Then, the control unit 10 drives the blower in a case where the sensor 11 detects that the adsorbent 2 is held by the holding unit 33 in a state where the blower is stopped. Even with such a configuration, as inEmbodiment 1, a decrease in the adsorption efficiency of carbon dioxide by the adsorbent 2 can be suppressed.

In addition, the aforementioned control unit 10 includes a computer system inside. A program for realizing the functions of each configuration of the above-described carbon dioxide recovery system 1 may be recorded on a computer-readable recording medium, the program recorded on the recording medium may be read into a computer system, and the program may be executed to perform processing in the above-described control unit 10. In addition, hardware other than the control unit 10 may perform the above-described processing.

Here, the "the program recorded on the recording medium may be read into a computer system, and the program may be executed" includes installing the program in the computer system. Here, it is assumed that the term "computer system" described here includes an OS and hardware such as a peripheral device.

In addition, the "computer system" may include a plurality of computer devices connected via a network including a communication line such as the Internet or a WAN, a LAN, and a dedicated line. In addition, the "computer-readable recording medium" refers to a portable medium such as a flexible disk, a magneto-optical disk, a ROM, and a CD-ROM, and a storage device such as a hard disk built in the computer system. As described above, the recording medium in which the program is stored may be a non-transitory recording medium such as a CD-ROM.

In addition, the recording medium also includes a recording medium provided internally or externally which is accessible from a distribution server for distributing the program. It should be noted that the program may be divided into a plurality of programs and may be downloaded at different timings and then combined by each configuration provided in the carbon dioxide recovery system 1, or a distribution server that distributes each divided program may be different.

Further, the "computer-readable recording medium" also includes a recording medium that holds the program for a certain period of time such as a volatile memory (RAM) inside the computer system such as a server or a client in a case in which a program is transmitted via a network. In addition, the program may be a program for realizing some of the functions described above. Further, the program may be a so-called difference file (difference program) capable of realizing the functions described above in combination with a program recorded in advance in the computer system.

In addition, the modification example described above can be combined, and the respective components can be appropriately modified or omitted.

### List of Reference Signs

1: Carbon dioxide recovery system
2: Adsorbent
3: Holding unit
4: Outdoor unit
4a: Blower (fan of outdoor unit)
4b: Motor
5: Indoor unit
10: Control unit
11: Sensor
12: Rotation speed sensor
13: Wind speed sensor
14: Power meter
15: Outside air temperature sensor
16: Surface temperature sensor
17: Communication device
21: Portable terminal
22: Server device
23: Operation unit
31: Blower (ventilating fan)
H: heat pump device

## Claims

1. A carbon dioxide recovery system comprising:
a blower;
a holding unit that holds an adsorbent that adsorbs carbon dioxide at a position where an air flow of the blower is received;
a sensor that detects that the adsorbent is held in the holding unit; and
a control unit that is configured to control the blower,
wherein the control unit drives the blower when the sensor detects that the adsorbent is held in the holding unit in a state where the blower is stopped.

2. The carbon dioxide recovery system according to Claim 1,
wherein the holding unit is a container having air permeability.

3. The carbon dioxide recovery system according to Claim 1 or 2,
wherein the blower is a fan included in an outdoor unit of a heat pump device.

4. The carbon dioxide recovery system according to Claim 3,
wherein the control unit increases a rotational speed of the blower when the sensor detects that the adsorbent is held in the holding unit in a state where the heat pump device operates.

5. The carbon dioxide recovery system
according to any one of Claims 1 to 4,
wherein the sensor detects by a weight that the adsorbent is held in the holding unit, and
the control unit outputs a notification signal for notifying a timing for replacing the adsorbent based on an increase in weight detected by the sensor.

6. The carbon dioxide recovery system
according to any one of Claims 1 to 4,
wherein the sensor is an optical sensor.

7. The carbon dioxide recovery system
according to any one of Claims 1 to 6,
further comprising:
a rotation speed sensor that measures a rotational speed of the blower,
wherein the control unit
calculates a cumulative air volume that has passed through the adsorbent based on a detection result by the sensor and a measurement result by the rotation speed sensor, and
outputs a notification signal for notifying a timing for replacing the adsorbent based on the cumulative air volume.

8. The carbon dioxide recovery system
according to any one of Claims 1 to 7,
further comprising:
a wind speed sensor that measures a wind speed of an air flow passing through the adsorbent,
wherein the control unit
calculates a cumulative air volume that has passed through the adsorbent based on a detection result by the sensor and a measurement result by the wind speed sensor, and
outputs a notification signal for notifying a timing for replacing the adsorbent based on the cumulative air volume.

9. The carbon dioxide recovery system
according to any one of Claims 1 to 8,
further comprising:
a power meter that measures power consumption of a motor provided in the blower,
wherein the control unit
calculates a cumulative air volume that has passed through the adsorbent based on a detection result by the sensor and a measurement result by the power meter, and
outputs a notification signal for notifying a timing for replacing the adsorbent based on the cumulative air volume.

10. The carbon dioxide recovery system
according to any one of Claims 1 to 9,
further comprising:
- an outside air temperature sensor that measures a temperature of outside air; and
- a surface temperature sensor that measures a surface temperature of the adsorbent,
wherein the control unit outputs a notification signal for notifying a timing for replacing the adsorbent based on a change in a difference between the temperature of the outside air and the surface temperature of the adsorbent.

11. The carbon dioxide recovery system
according to any one of Claims 5 and 7 to 9,
further comprising:
a communication device,
wherein the communication device transmits the notification signal output by the control unit to at least one of a portable terminal, a server device, or an operation unit of a heat pump device.
